# EUROPÄISCHE PATENTANMELDUNG

(11) **EP 1 085 362 A2**
(43) Veröffentlichungstag der Anmeldung: **21.03.2001**
(21) Anmeldenummer: 00118548.7
(22) Anmeldetag: 26.08.2000
(51) Int. Cl.: G02B 21/00

(54) **Optische Anordnung für Laser-Scanning Mikroskop**

(30) Priorität: 16.09.1999 DE 19944355
(71) Anmelder: Leica Microsystems Heidelberg GmbH, 68165 Mannheim (DE)
(72) Erfinder: Hartmann, Nicole, 37083 Göttingen (DE); Storz, Rafael, 69245 Bammental (DE)
(74) Vertreter: Reichert, Werner F., Dr.

(57) **Zusammenfassung**

Optische Anordnung im Strahlengang eines Laser-Scanning-Mikroskops, mit mindestens einem auf die Wellenlänge des Anregungslichts einer Lichtquelle (1) einstellbaren spektral selektiven Element (2), welches Anregungslicht (3) der Lichtquelle (1) in das Mikroskop (4) einkoppelt, das an einem Objekt gestreute und reflektierte Anregungslicht (3) aus dem Detektionsstrahlengang (5) zumindest teilweise ausblendet und das vom Objekt kommende Detektionslicht nicht ausblendet, ist zur konstruktiven Vereinfachung der bekannten Anordnung sowie zur Erweiterung der bislang möglichen Detektionsvarianten dadurch gekennzeichnet, dass dem Element (2) ein weiteres optisches Bauteil (8) nachgeordnet ist, nach dessen Durchlaufen die dispersiven und/oder doppelbrechenden Eigenschaften des Detektionslichts detektierbar sind.

## Beschreibung

Die vorliegende Erfindung betrifft eine optische Anordnung im Strahlengang eines Laser-Scanning-Mikroskops, mit mindestens einem auf die Wellenlänge des Anregungslichts einer Lichtquelle einstellbaren spektral selektiven Element, welches Anregungslicht der Lichtquelle in das Mikroskop einkoppelt, das an einem Objekt gestreute und reflektierte Anregungslicht aus dem Detektionsstrahlengang zumindest teilweise ausblendet und das vom Objekt kommende Detektionslicht nicht ausblendet.

Laser-Scan-Mikroskope der gattungsbildenden Art sind aus der DE-Patentanmeldung 199 06 757.0 bekannt. Als einstellbare spektral selektive Elemente können beispielsweise AOTF's (Acousto-Optical-Tunable-Filter) eingesetzt werden, die im Allgemeinen aus doppelbrechenden Kristallen bestehen. Aufgrund ihrer doppelbrechenden Eigenschaft wird zufällig polarisiertes Detektionslicht in zwei polarisierte Teilstrahlen - in einen ordentlichen und in einen außerordentlichen Strahl - aufgespalten, die nach Durchlaufen des Kristalls räumlich voneinander getrennt sind. Die Kristalle weisen aufgrund ihres Zuschnitts eine besondere Form auf, die im Allgemeinen nicht quaderförmig ist. Daher wird polychromatisches Licht aufgrund von Dispersion in seine spektrale Bestandteile zerlegt.

Die Verwendung eines einstellbaren spektral selektiven Elements im Strahlengang eines Laser-Scanning-Mikroskops ist aufgrund der oben beschriebenen Eigenschaften mit erheblichen Problemen verbunden, da üblicherweise lediglich ein einziger, nicht aufgespaltener Detektionsstrahl detektiert wird. Um die unerwünschten Wirkungen des einstellbaren spektral selektiven Elements rückgängig zu machen, muss zur Detektion das aus mehreren Teilstrahlen bestehende, dispersiv aufgespaltene und divergierend verlaufende Detektionslicht eine zusätzliche optische Anordnung durchlaufen. Es ist daher erforderlich, dem einstellbaren spektral selektiven Element ein baugleiches zweites Element nachzuordnen, das das Detektionslicht nach dessen Durchlauf parallelisiert. Ein drittes optisches Element ist den beiden Elementen nachzuordnen, so dass der parallel verlaufende, aus mehreren Detektionsteilstrahlen bestehende Detektionsstrahlengang in einen konvergierenden überführt wird und schließlich ist ein viertes baugleiches Element den drei Elementen nachzuordnen, das in der Lage ist, die dispersive und doppelbrechende Wirkung des ersten Elements rückgängig zu machen. Diese Anordnung ist äußerst aufwendig zu justieren, weist eine erhebliche Baugröße auf und ist vor allem durch die Verwendung vier identischer Kristalle sehr teuer.

Der vorliegenden Erfindung liegt nun die Aufgabe zugrunde, eine optische Anordnung im Strahlengang eines Laser-Scanning-Mikroskops derart auszugestalten und weiterzubilden, dass eine konstruktive Vereinfachung der bislang bekannten Anordnung und somit eine Kostenreduzierung sowie eine Erweiterung der bislang vorgesehenen Detektionsvarianten möglich ist.

Die voranstehende Aufgabe wird durch die Merkmale des Patentanspruches 1 gelöst. Danach ist eine gattungsbildende optische Anordnung dadurch gekennzeichnet, dass dem Element ein weiteres optisches Bauteil nachgeordnet ist, nach dessen Durchlaufen die dispersiven und/oder doppelbrechenden Eigenschaften des Detektionslichts detektierbar sind.

Erfindungsgemäß ist zunächst erkannt worden, dass aufgrund der doppelbrechenden Eigenschaft eines verwendeten einstellbaren spektral selektiven Elements ein zufällig polarisierter Detektionsstrahl in zwei senkrecht zueinander polarisierte Detektionsteilstrahlen aufgespalten wird und - eine geeignete Detektionseinrichtung vorausgesetzt - insbesondere im Hinblick auf seine Polarisationseingenschaften untersucht werden könnte. Somit könnte ein Polarisations-Laser-Scanning-Mikroskop realisiert werden. Da der Abstand von dem einstellbaren spektral selektiven Element zum Detektor baubedingt nicht beliebig klein sein kann und das Detektionslicht nach Duchrlauf durch das einstellbare spektral selektive Element divergiert, könnte es nur noch mit einem überdimensional großen Detektor detektiert werden. Dieser müsste darüber hinaus auch noch eine hinreichende Empfindlichkeit bei gleichem Signal-zu-Rausch Verhältnis aufweisen, da die auf eine große Fläche verteilte Gesamtintensität des an sich schon schwachen Detektionslichts pro Flächeneinheit weiter verringert wird. Daher ist zu einer effektiven Detektion die Nachordnung eines weiteren optischen Bauteils notwendig. Dieses Bauteil wandelt vor allem das divergente Detektionslicht in nicht divergentes um, so dass dieses mit Detektoren gängiger Baugröße und Empfindlichkeit detektiert werden kann. Auch eine Detektion im Hinblick auf die dispersiven Eigenschaften des Detektionslichts ist nach dem Durchlaufen des Elements und des Bauteils in erfindungsgemäßer Weise möglich.

Als einstellbares spektral selektives Element und als weiteres optisches Bauteil könnte ein AOTF (Acousto-Optical-Tunable-Filter), ein AOM (Acousto-Optical-Modulator) oder ein AOD (Acousto-Optical-Deflector) verwendet werden. Als weiteres optisches Bauteil könnte ein doppelbrechender Kristall, ein Prisma oder eine Linse dienen. Auch eine Kombination der verschiedenen optischen Bauteile ist denkbar. So könnte beispielsweise ein AOTF als einstellbares spektral selektives Element verwendet werden, das mit einem doppelbrechenden Kristall als das dem Element nachgeordnete optische Bauteil kombiniert wird.

Zur weiteren Verarbeitung des durch das Element in Teilstrahlen aufgespaltenen Detektionsstrahlengangs ist es von großem Vorteil, wenn das Bauteil dem Element derart nachgeordnet ist, dass die Lichtstrahlen des Detektionslichts nach deren Durchlauf weitestgehend parallel austreten. Wenn zwei baugleiche Elemente verwendet werden, kann dies beispielsweise durch eine punktsymetrische Anordnung der beiden Bauteile zueinander erreicht werden, so dass hierdurch die i.A. vorliegende besondere Form der verwendeten Bauteile berücksichtigt wird. In vorteilhafter Weise handelt es sich beim Detektionslicht nach dessen Durchlauf durch das Element und das Bauteil um parallele Lichtstrahlen, so dass - wie in der konventionellen Mikroskopie üblich - ein unendlicher Detektionsstrahlengang realisiert ist.

In Abhängigkeit der konkreten applikativen Anforderungen an das zu realisierende Laser-Scanning-Mikroskop kann es vorteilhaft sein, einen Detektionsteilstrahl zu detektieren. Ebenso könnten zwei oder mehrere Detektionsteilstrahlen gleichzeitig detektiert werden.

Mehrere Detektionsteilstrahlen können mit getrennten Detektoren detektiert werden, wobei die Detektionsteilstrahlen vorzugsweise simultan detektiert werden. Zur praktischen Durchführung der Detektion mehrerer Detektionsteilstrahlen mit mindestens einem Detektor wird in vorteilhafter Weise mindestens eine Strahlumlenkeinrichtung in einem entsprechenden Detektionsteilstrahlengang so positioniert und angeordnet, dass der entsprechende Detektionsteilstrahl zu dem ihm zugeordneten Detektor geleitet wird. Die entsprechende Strahlumlenkeinrichtung ist dem Element und dem Bauteil nachgeordnet, damit der das Element und das Bauteil durchlaufene und weitestgehend parallele Detektionsteilstrahl dem entsprechenden Detektor in unveränderter Strahlform zugeleitet werden kann, da dieser beispielsweise baubedingt weiter von dem Element und dem optischen Bauteil entfernt ist.

Im Hinblick auf eine konkrete Ausgestaltung könnte die Strahlumlenkeinrichtung beweglich angeordnet und in jedem der Detektionsteilstrahlengänge positionierbar sein. Beispielsweise könnte beim Vorliegen zweier Detektionsteilstrahlen entweder der eine oder der andere Detektionsteilstrahl mit nur einem Detektor detektiert werden, abhängig von der momentanen Stellung der beweglich angeordneten Strahlumlenkeinrichtung. Ganz allgemein könnte so ein beliebiger Detektionsteilstrahl von einem Detektor detektiert werden. Dies ist vor allem dann vorteilhaft, wenn für ein Laser-Scanning-Mikroskop ein bezüglich seiner Detektionseingenschaften höchstwertiger Detektor vorgesehen ist, der beispielsweise besonders rauscharm ist oder eine sehr hohe Empfindlichkeit in einem bestimmten Wellenlängenbereich aufweist.

Bei dem detektierten Detektionsteilstrahl kann es sich um einen polarisierten, ordentlichen Strahl des Detektionslichts handeln. Alternativ hierzu kann auch der polarisierte außerordentliche Strahl des Detektionslichts detektiert werden. In einer bevorzugten Ausführung werden beide polarisierte Teilstrahlen mit zwei getrennten Detektoren simultan detektiert. Durch diese Vorgehensweise ist ein Laser-Scanning-Mikroskop gegeben, das das Detektionslicht hinsichtlich seiner Polarisationseingenschaften detektieren kann, ohne die dafür üblicherweise notwendigen Bauteile wie Polarisator und Analysator in den Mikroskopstrahlengang einzubringen.

In vorteilhafter Weise ist es ebenfalls möglich, die Eigenschaften des Detektionslichts mit einem Mulitbanddetektor oder mit einem Spektrometer zu detektieren. Ein Mulitbanddetektor ist aus der DE 43 30 347 C2 bekannt, deren Inhalt als bekannt vorausgesetzt und hier ausdrücklich mit einbezogen wird. Die von dem einstellbaren spektral selektiven Element hervorgerufene dispersive Aufspaltung des Detektionslichts kann derart ausgenutzt werden, das der dem Element und dem optischen Bauteil nachgeordnete Multibanddetektor bzw. Spektrometer die schon teilweise erfolgte dispersive Aufspaltung berücksichtigt und darüber hinaus verstärkt. Als Spektrometer könnte ein Gitter- oder ein Prismenspektrometer dienen.

Im Hinblick auf eine konkrete Ausgestaltung kann es von Vorteil sein, wenn mindestens ein Detektionsteilstrahl mittels einer Ausblendeinrichtung aus dem Detektionsstrahlengang ausgeblendet wird. Als Ausblendeinrichtung könnte eine Strahlfalle dienen, wie sie üblicherweise in optischen Anordnungen eingesetzt wird. Die Ausblendeinrichtung könnte beweglich angeordnet sein, so dass sie gezielt auf einen oder auf mehrere Detektionsteilstrahlen wirken kann. Die Bewegungsrichtung der beweglich angeordneten Ausblendeinrichtung ist vorzugsweise in einer Ebene senkrecht zum Detektionsstrahlengang.

In erfindungsgemaßer Weise kann dem Element und dem Bauteil eine Strahlumlenkeinrichtung nachgeordnet sein, die das vom Objekt kommenden Detektionslicht nach Durchlaufen des Elements und des Bauteils zurückreflektiert, so dass das Detektionslicht nach dem zweiten Durchlauf durch das Bauteil und das Element von mindestens einem Detektor detektierbar ist. Diese optische Anordnung, bestehend aus dem einstellbaren spektral selektiven Element, dem weiteren optischen Bauteil und der Strahlumlenkeinrichtung, ist in ihrer Wirkung identisch zu der aus dem Stand der Technik bekannten Anordnung, die aus vier identischen, hintereinander angeordneten Kristallen besteht. Beide Anordnungen sind in der Lage, das durch das einstellbare spektral selektive Element divergierende, in mehrere Teilstrahlen aufgespaltete und dispersiv aufgefächerte Detektionslicht wieder zu einem einzigen, koaxial verlaufenden Detektionsstrahl zu vereinigen. Die hier vorgeschlagene Ausführung ist daher von erheblichem Vorteil, da hier nur zwei anstelle der vier Kristalle benötigt werden, die Baugröße der Anordnung insgesamt reduziert wird, der Justageaufwand verringert sowie die Kosten reduziert werden können.

Die Strahlumlenkeinrichtung könnte durch eine zumindest teilweise verspiegelte Rückseite des optischen Bauteils gebildet sein. Hierdurch kann die Anzahl der in der optischen Anordnung vorgesehenen Bauteile sowie die Freiheitsgrade der Justierung nochmals reduziert werden.

Im Hinblick auf eine konkrete Ausgestaltung ist die Strahlumlenkeinrichtung derart angeordnet und positioniert, dass der zur Strahlumlenkeinrichtung hinlaufende Detektionsstrahlengang gegenüber dem von der Strahlumlenkeinrichtung zurücklaufende Detektionsstrahlengang zumindest geringfügig verkippt ist. In vorteilhafter Weise wird der Verkippungswinkel derart gewählt, dass er größer als 0 und kleiner als 20 Grad ist. Somit hat das Detektionslicht nach zweimaligem Durchlauf durch das Element und das Bauteil einen räumlichen Strahlversatz zu dem vom Mikroskop kommenden Detektionslicht, wodurch das von der Strahlumlenkeinrichtung reflektierte Detektionslicht von mindestens einer weiteren Strahlumlenkeinrichtung zu mindestens einer Detektionseinrichtung geleitet werden kann.

In vorteilhafter Weise ist die dem Element und dem Bauteil nachgeordnete Strahlumlenkeinrichtung derart ausgestaltet, dass nur eine vorgebbare Anzahl der vom Objekt kommenden Detektionsteilstrahlen in das Bauteil und das Element zurückreflektiert wird. Durch diese Maßnahme wirkt die Strahlumlenkeinrichtung nicht auf alle Detektionsteilstrahlen, so dass in vorteilhafter Weise nur ein vorgebbarer Anteil des Detektionslichts zweimal das Element und das Bauteil durchläuft und somit hinsichtlich anwendungsspezifischer Merkmale als gefilterter, koaxial wiedervereinigter Lichtstrahl mit entsprechenden Detektionseinrichtungen detektiert werden kann.

In einer bevorzugten Ausführung werden sowohl die aus dem Element und aus dem Bauteil austretenden Detektionsstrahlen als auch die in das Bauteil und in das Element zurückreflektierten Detektionsteilstrahlen jeweils mit einem Detektor simultan detektiert. Insbesondere die in das Bauteil und in das Element zurückreflektierten Detektionsteilstrahlen können nach durchlaufen des Bauteils und des Elements als wiedervereinigter Detektionsstrahl mit einem Detektor nachgewiesen werden. Die aus dem Element und dem Bauteil austretenden Detektionsteilstrahlen können simultan mit der entsprechenden Anzahl von Detektoren ebenfalls detektiert werden. Hierbei ist es von erheblichem Vorteil, wenn die dem Element und dem Bauteil nachgeordnete Strahlumlenkeinrichtung mit mindestens einem Durchgang versehen ist, wo nämlich gerade der eine bzw. mehrere Detektionsteilstrahlen, die aus dem Element und dem Bauteil austreten, hindurchtreten können, wohingegen alle anderen Detektionsteilstrahlen wieder in das Bauteil und das Element zurückreflektiert werden. Diese mit mindestens einem Durchgang versehene Strahlumlenkeinrichtung könnte beweglich angeordnet sein, so dass beispielsweise bei einer entsprechenden Positionierung dieser Strahlumlenkeinrichtung lediglich der polarisierte, ordentliche Detektionsteilstrahl durch die Strahlumlenkeinrichtung durchtreten kann. Die Bewegungsrichtung der beweglich angeordneten Strahlumlenkeinrichtung ist vorzugsweise in einer Ebene senkrecht zum Detektionsstrahlengang.

Ein entsprechender, die Strahlumlenkeinrichtung passierender Detektionsteilstrahl, könnte von einem Detektor detektiert werden. Hierzu könnte der entsprechende Detektor direkt mit der einen Durchgang aufweisenden Strahlumlenkeinrichtung verbunden sein, so dass keine weiteren optischen Komponenten benötigt werden. Ebenso ist es denkbar, dass ein in das Bauteil und in das Element zurückreflektierter Detektionsteilstrahl von einem Detektor gemessen wird.

In vorteilhafter Weise kann das Detektionslicht entweder nach einmaligem oder nach zweimaligem Durchlauf durch das Element und das Bauteil detektiert werden, indem eine beweglich angeordnete und auf alle Detektionsteilstrahlen wirkende Strahlumlenkeinrichtung, die dem Element und dem Bauteil nachgeordnet ist, aus dem Detektionsstrahlengang entfernt oder in den Detektionsstrahlengang eingebracht wird. Hierdurch kann mit sehr einfachen Mitteln zwischen zwei erfindungsgemäßen Detektionsvarianten umgeschaltet werden.

Als Strahlumlenkeinrichtungen könnten herkömmliche Spiegel dienen, die die Detektionsteilstrahlen bzw. den Detektionsstrahlengang in die gewünschte Richtung reflektieren. Als Strahlumlenkeinrichtung wäre ebenfalls ein phasenkonjugierter Spiegel denkbar, der neben der Reflektion des Detektionslichts außerdem in der Lage ist, Verformungen der Wellenfronten des Detektionslichts auszugleichen bzw. rückgängig zu machen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung der Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im allgemeinen bevorzugte Ausgestaltungen und Weiterbildungen der Lehre erläutert. In den schematischen Darstellungen der Zeichnungen zeigt
- Fig. 1: eine aus dem Stand der Technik bekannte Anordnung im Strahlenganges eines Laser-Scanning-Mikroskops,
- Fig. 2: eine erfindungsgemäße optische Anordnung im Strahlengang eines Laser-Scanning-Mikroskops,
- Fig. 3: die optische Anordnung aus Fig. 2, bei der eine alternative Detektion vorgesehen ist,
- Fig. 4: eine optische Anordnung im Strahlengang eines Laser-Scanning-Mikroskops, bei der das Detektionslicht nach Durchlaufen des Elements und des Bauteils zurückreflektiert wird,
- Fig. 5: die verkippte Anordnung der Strahlumlenkeinrichtung aus Fig. 4,
- Fig. 6: eine optische Anordnung mit einer Ausblendeinrichtung,
- Fig. 7: eine dem Element und dem Bauteil nachgeordnete und mit einem Durchgang versehene Strahlumlenkeinrichtung,
- Fig. 8: eine optische Anordnung im Strahlengang eines Laser-Scanning-Mikroskops, bei der eine beweglich angeordnete Strahlumlenkeinrichtung im Detektionsstrahlengang positionierbar ist.

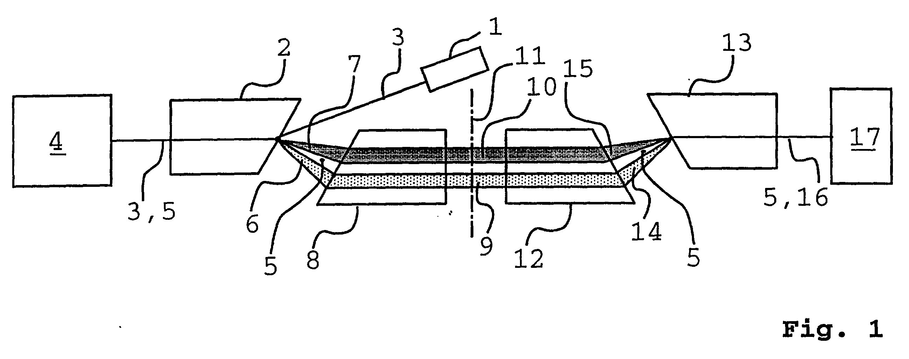

In einer schematischen Darstellung der Fig. 1 ist eine gattungsbildende optische Anordnung im Strahlengang eines Laser-Scanning-Mikroskops dargestellt, die ein auf die Wellenlänge des Anregungslichts einer Lichtquelle 1 einstellbares spektral selektives Element 2 aufweist, welches Anregungslicht 3 der Lichtquelle 1 in das Mikroskop 4 einkoppelt, das an einem Objekt gestreute und reflektierte Anregungslicht aus dem Detektionsstrahlengang 5 zumindest teilweise ausblendet und das vom Objekt kommende Detektionslicht nicht aus dem Detektionsstrahlengang 5 ausblendet. Aufgrund der Form und der Wirkungsweise des Elements 2 ist das aus dem Element 2 austretende Detektionslicht divergent, es ist in mindestens zwei Detektionsteilstrahlen 6 und 7 aufgespalten, die jeweils auch noch dispersiv aufgefächert sind. Durch ein dem Element 2 nachgeordnetes baugleiches und punktsymetrisch angeordnetes Element 8 ist es möglich, die divergierend verlaufenden Detektionsteilstrahlen 6, 7 zumindest weitestgehend in parallel verlaufende Detektionsteilstrahlen 9, 10 umzuwandeln. Bezüglich der angedeuteten Spiegelachse 11 sind den ersten zwei Elementen 2, 8 zwei weitere Elemente 12, 13 derart nachgeordnet, so dass die parallel verlaufenden Detektionsteilstrahlen 9, 10 zunächst nach Durchlaufen des Elements 12 in konvergierende Detektionsteilstrahlen 14, 15 umgewandelt werden. Schließlich werden diese nach Durchlaufen des Elements 13 zu einem einzigen koaxialen verlaufenden Detektionsstrahl 16 umgewandelt, der sodann mit dem Detektor 17 detektierbar ist.

Somit dienen die dem einstellbaren spektral selektiven Element 2 nachgeordneten Elemente 8, 12 und 13 lediglich dem Rückgängigmachen der Wirkungen des Elements 2. Die optische Anordnung aus Fig. 1 ist abgesehen von der Verwendung von vier teuren Kristallen im Detektionsstrahlengang aufwendig zu justieren und beansprucht darüber hinaus eine ganz erhebliche Baugröße.

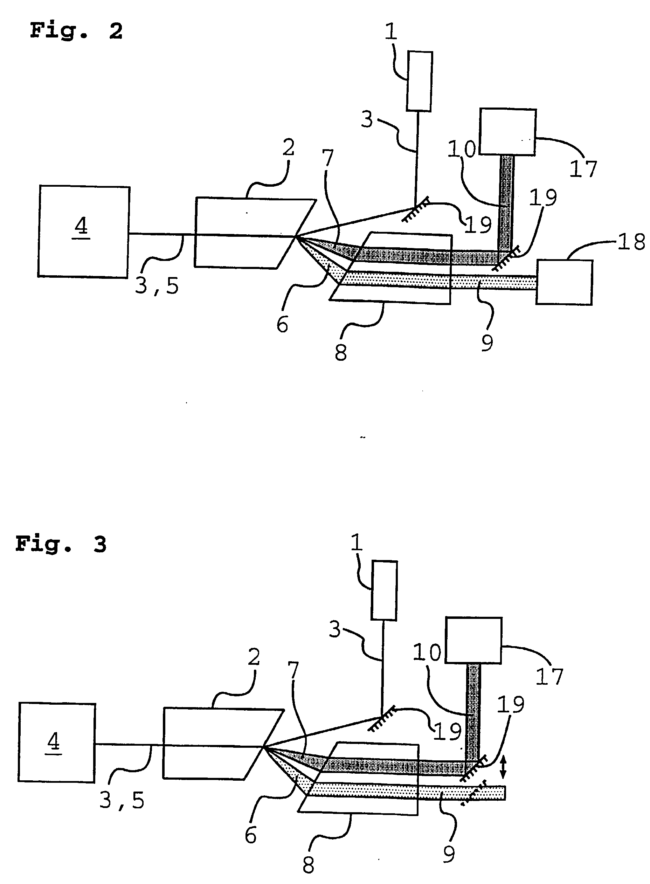

Erfindungsgemäß weist die optische Anordnung im Strahlengang eines Laser-Scanning-Mikroskops ein dem Element 2 nachgeordnetes weiteres optisches Bauteil 8 auf. Nach durchlaufen dieses Bauteils sind die dispersiven und/oder doppelbrechenden Eigenschaften des Detektionslichts detektierbar. Hierbei handelt es sich bei dem Element 2 und dem Bauteil 8 jeweils um einen AOTF (Acousto-Optical-Tunable-Filter), wobei nur das Element 2 als aktives optisches Element ausgestaltet ist. Das Bauteil 8 ist dem Element 2 derart nachgeordnet, so dass die Lichtstrahlen des Detektionslichts nach durchlaufen des Elements 2 und des Bauteils 8 weitestgehend parallel austreten. Hierzu ist eine punktsymmetrische Anordnung von Bauteil 8 relativ zu Element 2 realisiert, was beispielsweise aus Fig. 2 entnommen werden kann. Hierbei ist Bauteil 8 in einer entsprechenden Entfernung und derart versetzt angeordnet, so dass das Detektionslicht das Bauteil 8 weitestgehend verlustfrei und ohne interne Reflektionen durchlaufen kann.

In einer konkreten Ausführung wird lediglich ein Detektionsteilstrahl detektiert, wozu auf Fig. 3 verwiesen wird. In einer alternativen Ausführung werden nach dem Bauteil 8 zwei Detektionsteilstrahlen gleichzeitig detektiert, was in Fig. 2 dargestellt ist. Hierbei werden die Detektionsteilstrahlen 9 und 10 mit den dem Element 2 und dem Bauteil 8 nachgeordneten Detektoren 17 und 18 detektiert. Hierbei handelt es sich um eine gleichzeitige Detektion der beiden Detektionsteilstrahlen 9, 10. Ebenfalls ist in Fig. 2 angedeutet, dass dem Bauteil 8 eine Strahlumlenkeinrichtung 19 nachgeordnet ist, die den Detektionsteilstrahl 10 zu dem Detektor 17 leitet.

In einer alternativen Ausführung weist ein Laser-Scanning-Mikroskop lediglich einen Detektor 17 auf, was ist in Fig. 3 dargestellt ist. Hierbei ist in vorteilhafter Weise eine Strahlumlenkeinrichtung 19 beweglich angeordnet und in beide, dort dargestellten Detektionsteilstrahlengänge 9 und 10 positionierbar. Somit kann in Abhängigkeit von der Stellung der beweglich angeordneten Strahlumlenkeinrichtung 19 entweder der Detektionsteilstrahl 10 oder der Detektionsteilstrahl 9 mit dem Detektor 17 detektiert werden. Der Detektor 17 hat in diesem Ausführungsbeispiel im gesamten zu detektierenden Wellenlängenbereich eine höchst sensitive Detektionscharakteristik; er ist darüber hinaus durch eine besondere Kühlung, die einen nahezu vernachlässigbaren Rauschanteil garantiert, ausgezeichnet.

Bei den in Fig. 2 und 3 dargestellten Detektionsteilstrahlen 9 und 10 handelt es sich bei dem Teilstrahl 9 um den ordentlichen, polarisierten Strahl, bei dem Teilstrahl 10 um den außerordentlichen, polarisierten Strahl.

In den Ausführungsbeispielen der Fig. 2 und 3 ist bzw. sind die Detektoren 17 und 18 als Multibanddetektoren ausgeführt, die die spektrale Zerlegung der einzelnen Detektionsteilstrahlen 9 und 10 berücksichtigen und in vorteilhafter Weise verstärken. Aufgrund der dort vorliegenden Parallelität der Detektionsteilstrahlen 9 und 10 ist die Anordnung der Detektoren 17, 18 im Hinblick auf Ihre Entfernung von dem Bauteil 8 unkritisch was zusätzliche Freiheitsgrade beim Gerätedesign zur Folge hat.

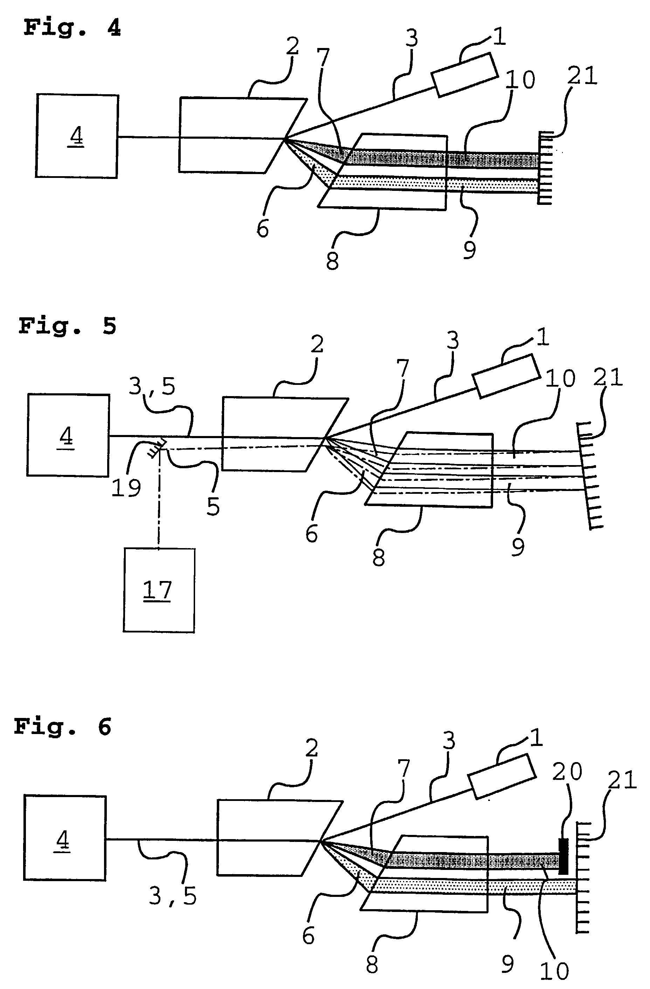

In der konkreten Ausführung aus Fig. 6 ist im Detektionsstrahlengang eine Ausblendeinrichtung 20 in Form einer Strahlfalle implementiert. Somit wird der Detektionsteilstrahl 10 für die Detektion nicht berücksichtigt.

Wie der Ausführung aus Fig. 4 entnommen werden kann, ist in erfindungsgemäßer Weise dem Element 2 und dem Bauteil 8 eine Strahlumlenkeinrichtung 21 nachgeordnet, die das vom Objekt bzw. Mikroskop kommende Detektionslicht nach Durchlaufen des Elements 2 und des Bauteils 8 zurückreflektiert, so dass das Detektionslicht nach dem zweimaligen Durchlauf durch das Bauteil 8 und das Element 2 von einem in Fig. 4 nicht dargestellten Detektor detektierbar ist. Durch die Strahlumlenkeinrichtung 21 kann auf die in Fig. 1 dargestellten Elemente 12 und 13 in vorteilhafter Weise verzichtet werden, wobei dennoch - nämlich nach dem zweimaligen Durchlaufen des Detektionslichts durch die Elemente 2 und 8 - ein wiedervereinigter Detektionsstrahl detektierbar ist. Insbesondere im Hinblick auf die Justierung der nunmehr beiden dem Element 2 nachgeordneten optischen Bauteile 8 und 21 bietet die erfindungsgemäße Anordnung - verglichen zur Ausführung aus Fig. 1, wo dem Element 2 drei baugleiche Elemente 8, 12 und 13 nachgeordnet sind - erhebliche Vorteile.

Die Strahlumlenkeinrichtung 21 ist - wie in Fig. 5 gezeigt - derart angeordnet und positioniert, dass der zur Strahlumlenkeinrichtung 21 hinlaufende Detektionsstrahlengang gegenüber dem von der Strahlumlenkeinrichtung 21 zurückreflektierten Detektionsstrahlengang verkippt angeordnet ist. Der hinlaufende Detektionsstrahlengang ist in Fig. 5 mit durchgehenden Linien gezeichnet, der von der Strahlumlenkeinrichtung 21 zurückreflektierte Detektionsstrahlengang ist strich-punktiert dargestellt. Der Verkippungswinkel zwischen beiden Detektionsstrahlen beträgt 10 Grad. In Fig. 5 ist zur besseren Darstellung die Strahlumlenkeinrichtung 21 jedoch um einen größeren Winkel verkippt.

Aufgrund der verkippten Anordnung der Strahlumlenkeinrichtung 21 ist das in das Bauteil 8 und das Element 2 zurückreflektierte Detektionslicht - strichpunktiert dargestellt - seitlich zu dem vom Mikroskop 4 kommenden Detektionsstrahlengang versetzt. Somit kann das Detektionslicht nach zweimaligem Durchlauf durch das Element 2 und das Bauteil 8 von einer weiteren Strahlumlenkeinrichtung 19 zu dem Detektor 17 geleitet werden.

In der Ausführung gemäß Fig. 6 wird nur der Detektionsteilstrahl 9 in das Bauteil 8 und das Element 2 zurückreflektiert, der Detektionsteilstrahl 10 wird mit Hilfe der Ausblendeinrichtung 20 aus dem Detektionsstrahlengang entfernt.

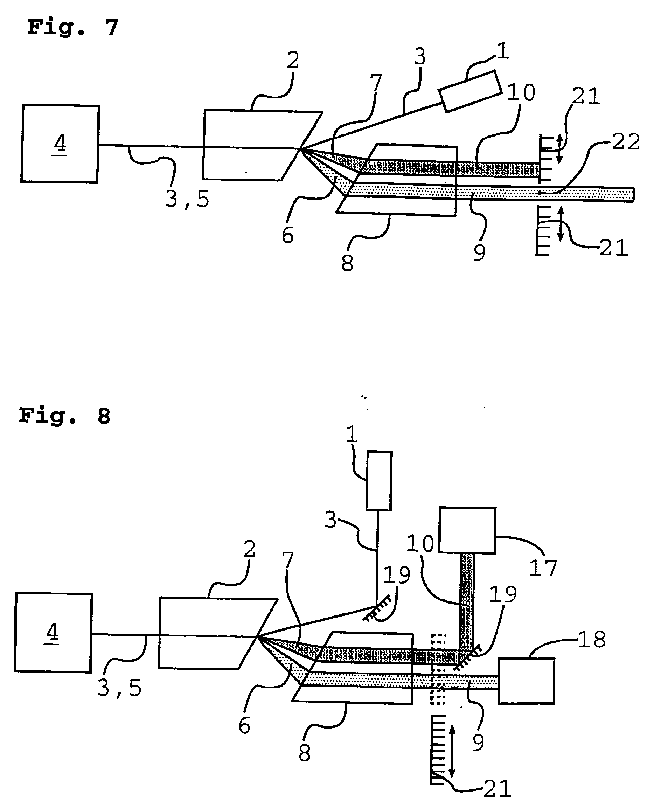

In Fig. 7 ist eine bevorzugte Ausführung dargestellt, bei der sowohl der aus dem Element 2 und dem Bauteil 8 austretende Detektionsteilstrahl 9 als auch der in das Bauteil 8 und das Element 2 zurückreflektierte Detektionsteilstrahl 10 jeweils mit einem - nicht dargestellten - Detektor detektiert wird. Hierbei ist die dem Element 2 und dem Bauteil 8 nachgeordnete Strahlumlenkeinrichtung 21 mit einem Durchgang 22 versehen, der es ermöglicht, den Detektionsteilstrahl 9 zu dem nicht dargestellten Detektor passieren zu lassen. In dieser Ausführung ist - wie auch in der aus Fig. 5 - die Strahlumlenkeinrichtung in vorteilhafter Weise verkippt angeordnet (in Fig. 7 nicht dargestellt), so dass der in das Bauteil 8 und das Element 2 zurückreflektierte Detektionsteilstrahl 10 nach dessen Durchlauf ebenfalls einen seitlichen Versatz zum Detektionsstrahl 5, der vom Mikroskop 4 kommt, aufweist, so dass der zurückreflektierte Detektionsteilstrahl 10 mit einer - in Fig. 7 nicht dargestellten Strahlumlenkeinrichtung zu dem - in Fig. 7 ebenfalls nicht dargestellten - Detektor zugeführt wird. In vorteilhafter Weise ist die Strahlumlenkeinrichtung 21 beweglich angeordnet und derart positionierbar, dass entweder der Detektionsteilstrahl 9 oder der Detektionsteilstrahl 10 die Strahlumlenkeinrichtung 21 passieren kann. In vorteilhafter Weise ist der mit dem Durchgang 22 versehenen Strahlumlenkeinrichtung 21 ein in Fig. 7 nicht dargestellter Multibanddetektor nachgeordnet, der den die Strahlumlenkeinrichtung 21 passierenden Detektionsteilstrahl weiter spektral zerlegt und detektiert. Der von der Strahlumlenkeinrichtung 21 in das Bauteil 8 und das Element 2 zurückreflektierte Detektionsteilstrahl wird in vorteilhafter Weise von einem herkömmlichen, in Fig. 7 nicht dargestellten Detektor, der als Photomultiplier ausgeführt ist, detektiert.

In einer Ausführung gemäß Fig. 8 ist eine optische Anordnung im Strahlengang eines Laser-Scanning-Mikroskops dargestellt, die eine beweglich angeordnete und auf die Detektionsteilstrahlen 9 und 10 wirkende Strahlumlenkeinrichtung 21 aufweist, bei der in Abhängigkeit der Position der Strahlumlenkeinrichtung 21 die Detektionsteilstrahlen 9 und 10 nach einmaligem Durchlauf durch das Element 2 und das Bauteil 8 mit den Detektoren 17, 18 detektiert werden. Befindet sich die beweglich angeordnete Strahlumlenkeinrichtung 21 im Detektionsstrahlengang, so werden beide Detektionsteilstrahlen 9, 10 durch das Bauteil 8 und das Element 2 zurückreflektiert, wo sie dann gemäß der Ausführung aus Fig. 5 mit einem entsprechendem - in Fig. 8 nicht dargestellten - Detektor nachgewiesen werden können. In den Ausführungen der Fig. 2 bis 8 sind als Strahlumlenkeinrichtungen 19 und 21 herkömmliche Spiegel verwendet worden.

Ein weiteres Ausführungsbeispiel für die Ausgestaltung des spektral selektiven Elements 2 ist, dass das Element 2 und/oder das optische Bauteil 8 ein AOM (Acusto-Optical-Modulator) ist. Eine weitere Ausführungsform des spektral selektiven Elements 2 ist, dass das optische Bauteil 8 als AOD (Acusto-Optical-Deflektor) ausgebildet ist. Das optische Bauteil 8 kann ferner als doppelbrechender Kristall, Prisma und Zylinderlinse ausgebildet sein.

Für die Detektion eines oder mehrerer Detektionslichtstrahlen 9 nach dem Bauteil werden die Detektionslichtstrahlen entsprechenden Detektoren 17 und 18 zugeführt.

Die in der Vorrichtung vorgesehenen Strahlumlenkeinrichtungen 19 und 21 sind als Spiegel oder als phasenkonjugierte Spiegel ausgebildet.

Abschließend sei ganz besonders darauf hingewiesen, dass die voranstehend erörterten Ausführungsbeispiele lediglich zur Beschreibung der beanspruchten Lehre dienen, diese jedoch nicht auf die rein willkürlich gewählten Ausführungsbeispiele einschränken.

### Bezugszeichenliste

- 1: Lichtquelle
- 2: einstellbares spektral selektives Element
- 3: Anregungslicht
- 4: Mikroskop
- 5: Detektionsstrahlengang
- 6, 7: Detektionsteilstrahlen
- 8: Element, weiteres optisches Bauteil
- 9,: zunächst parallel verlaufende
- 10: Detektionsteilstrahlen
- 11: Symmetrieachse
- 12,: optische Elemente
- 13 14,: konvergierend verlaufende
- 15: Detektionsteilstrahlen
- 16: wiedervereinigter Detektionsstrahl
- 17,: Detektor
- 18 19: Strahlumlenkeinrichtung
- 20: Ausblendeinrichtung
- 21: Strahlumlenkeinrichtung
- 22: Durchgang von (21)

## Patentansprüche

1. Optische Anordnung im Strahlengang eines Laser-Scanning-Mikroskops, mit mindestens einem auf die Wellenlänge des Anregungslichts einer Lichtquelle (1) einstellbaren spektral selektiven Element (2), welches Anregungslicht (3) der Lichtquelle (1) in das Mikroskop (4) einkoppelt, das an einem Objekt gestreute und reflektierte Anregungslicht (3) aus dem Detektionsstrahlengang (5) zumindest teilweise ausblendet und das vom Objekt kommende Detektionslicht nicht ausblendet,
**dadurch gekennzeichnet,** dass dem
Element (2) ein weiteres optisches Bauteil (8) nachgeordnet ist, nach dessen Durchlaufen die dispersiven und/oder doppelbrechenden Eigenschaften des Detektionslichts detektierbar sind.

2. Optische Anordnung nach Anspruch 1, dadurch gekennzeichnet, dass das Bauteil (8) dem Element (2) nachgeordnet ist, so dass die Lichtstrahlen des Detektionslichts (5) nach deren Durchlaufen durch das Element (2) und das Bauteil (8) weitestgehend parallel als Detektionsteilstrahlen (9, 10) austreten.

3. Optische Anordnung nach Anspruch 2, dadurch gekennzeichnet, dass mindestens ein Detektor (17, 18) nach dem optischen Bauteil (8) angeordnet ist und mindestens eine Strahlumlenkeinrichtung (19) mindestens einen Detektionsteilstrahl (9, 10) zu einem Detektor (17, 18) leitet, wobei die Strahlumlenkeinrichtung (19) dem optischen Element (2) und dem Bauteil (8) nachgeordnet ist.

4. Optische Anordnung nach Anspruch 3, dadurch gekennzeichnet, dass die Strahlumlenkeinrichtung (19) beweglich angeordnet und in jedem der Detektionsteilstrahlen (9, 10) positionierbar ist.

5. Optische Anordnung nach Anspruch 2, dadurch gekennzeichnet, dass eine Ausblendeinrichtung (20) vorgesehen ist, die mindestens einen Detektionsteilstrahl (9, 10) aus dem Detektionsstrahlengang ausblendet, wobei die Ausblendeinrichtung (20) beweglich angeordnet ist.

6. Optische Anordnung nach Anspruch 3, dadurch gekennzeichnet, dass dem Element (2) und dem Bauteil (8) eine Strahlumlenkeinrichtung (21) nachgeordnet ist, die das vom Objekt kommende Detektionslicht nach Durchlaufen des Elements (2) und des Bauteils (8) zurückreflektiert, so dass das Detektionslicht nach dem zweiten Durchlauf durch das Bauteil (8) und das Element (2) von mindestens einem Detektor (17) detektierbar ist.

7. Optische Anordnung nach Anspruch 6, dadurch gekennzeichnet, dass die Strahlumlenkeinrichtung (21) derart angeordnet und positioniert ist, dass der zur Strahlumlenkeinrichtung (21) hinlaufende Detektionsstrahlengang (5) gegenüber dem von der Strahlumlenkeinrichtung (21) zurücklaufende Detektionsstrahlengang (5) zumindest geringfügig verkippt ist.

8. Optische Anordnung nach Anspruch 7, dadurch gekennzeichnet, dass der Verkippungswinkel größer als 0 und kleiner als 20 Grad ist.

9. Optische Anordnung nach Anspruch 6, dadurch gekennzeichnet, dass die dem Element (2) und dem Bauteil (8) nachgeordnete Strahlumlenkeinrichtung (21) nur eine vorgebbare Anzahl der vom Objekt kommenden Detektionsteilstrahlen (9, 10) in das Bauteil (8) und das Element (2) zurückreflektiert.

10. Optische Anordnung nach Anspruch 9, dadurch gekennzeichnet, dass sowohl die aus dem Element (2) und dem Bauteil (8) austretenden Detektionsteilstrahlen (9, 10) als auch die in das Bauteil (8) und in das Element (2) zurückreflektierten Detektionsteilstrahlen jeweils mit einem Detektor simultan detektiert werden.

11. Optische Anordnung nach Anspruch 9, dadurch gekennzeichnet, dass die dem Element (2) und dem Bauteil (8) nachgeordnete Strahlumlenkeinrichtung (21) mit mindestens einem Durchgang (22) versehen ist.

12. Optische Anordnung nach Anspruch 6, dadurch gekennzeichnet, dass das Detektionslicht entweder nach einmaligem oder zweimaligem Durchlauf durch das Element (2) und das Bauteil (8) detektierbar ist, indem entweder eine beweglich angeordnete und auf alle Detektionsteilstrahlen wirkende Strahlumlenkeinrichtung (21) aus dem Detektionsstrahlengang entfernt oder in den Detektionsstrahlengang eingebracht wird.
